# EUROPEAN PATENT SPECIFICATION

(11) **EP 3 316 389 B1**
(45) Date of publication and mention of the grant of the patent: **03.01.2024**
(21) Application number: 16195810.3
(22) Date of filing: 26.10.2016
(51) Int. Cl.: H01M 10/48, H02J 7/00, B60L 58/10, H01M 10/42, G06F 15/17, H01M 50/209, H01M 50/296, H01M 50/505, H01M 50/569

(54) **BATTERY SYSTEM, COMMUNICATION CIRCUIT FOR A BATTERY SYSTEM AND VEHICLE**
BATTERIESYSTEM, KOMMUNIKATIONSSCHALTUNG FÜR EIN BATTERIESYSTEM UND FAHRZEUG
SYSTÈME DE BATTERIE, CIRCUIT DE COMMUNICATION POUR UN SYSTÈME DE BATTERIE ET VÉHICULE

(43) Date of publication of application: 02.05.2018
(73) Proprietor: Samsung SDI Co., Ltd., Giheung-gu Yongin-si, Gyeonggi-do 17084 (KR)
(72) Inventor: Hofer, Maximilian, 8230 Hartberg (AT); Pretschuh, Markus, 8020 Graz (AT)
(74) Representative: Gulde & Partner

(56) References cited:
- EP-A1- 2 493 003
- EP-A1- 2 738 863
- US-A1- 2008 118 819

## Description

### Field of the Invention

The present invention relates to a battery system, to a communication circuit for a battery system and to a vehicle with such a battery system and/or such a communication circuit.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle.

Battery modules can be constructed either in block design or in modular design. In block designs, each battery cell is coupled to a common current collector structure and a common battery management system. In modular designs, pluralities of battery cells are connected to form submodules and several submodules are connected to form the battery module. Battery management functions may be realized either on module or submodule level and thus interchangeability of the components is improved. One or more battery modules are mechanically and electrically integrated, equipped with a thermal management system and set up for communication with one or more electrical consumers in order to form a battery system.

To provide thermal control of a battery system a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable deteriorates and the life-span of the rechargeable battery is shortened. Thus, cooling devices for effectively emitting/discharging/dissipating heat from the cells is required.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge (SoC), potential electrical performance, charging ability and internal resistance as well as actual or predicted power demands or surpluses of the consumers. Battery systems usually comprise a battery management system (BMS) for processing this information.

The BMS is usually coupled to the controller of one or more electrical consumers as well as to each of the battery modules of the battery system. According to the prior art, the communication between the BMS and the battery modules is mainly provided using a two wire protocol. A known protocol is based on *serial peripheral interface* (SPI) bus system and utilizes the BMS to translate a common SPI signal into a customized SPI signal. The customized SPI signal is used for communication of the BMS with the battery modules. Other known approaches utilize galvanic isolated SPI systems or galvanic isolated controller area network (CAN) bus systems for communication between the BMS and the battery modules.

The wiring complexity and the production costs of the two wire communication networks are high due to the required amount of electric conductors. Further, a risk for reversed polarity persists and thus unsolved safety issues remain in the battery system. EP 2 493 003 A1 discloses a battery system with battery modules having a communication circuit connected between communication terminals and connected to a power terminal for receiving a potential of the power terminal connected to another battery module via a busbar. It is thus an object of the present invention to overcome or reduce at least some of the drawbacks of the prior art and to provide a battery system with a communication network between individual battery modules that has low wiring complexity and manufacturing costs.

### Summary of Invention

One or more of the drawbacks of the prior art could be avoided or at least reduced by means of the present invention. In particular, a battery system is provided that comprises a first system terminal and a second system terminal and a plurality of battery modules that are connected in series between the first system terminal and the second system terminal. Each battery module comprises a plurality of battery cells that are connected in series and/or in parallel between a first module terminal and a second module terminal of the respective battery module. Each battery module further comprises a cell supervision circuit (CSC) that comprises a first signal port and a second signal port. The CSC is preferably configured to monitor the cell voltages of some or each of the battery module's battery cells and may further be configured to actively or passively balance the voltages of the individual battery cells within the module. According to the present invention, the CSC is further configured to maintain the communication between the battery modules among each other and the BMS.

The battery system further comprises a plurality of busbars, wherein each busbar is electrically interconnecting a second module terminal of a first battery module and a first module terminal of second battery module. In other words, the busbar provides the power connections between the individual battery modules. The battery system further comprises a plurality of first data lines. According to the present invention, the second signal port of a first battery module and the first signal port of a second battery module are coupled, i.e. electronically coupled, via one of a plurality of first data lines and via one of the plurality of busbars. Further, the cell supervision circuits are configured to transmit and receive signals via the first data lines and via the busbars. In other words, the present invention provides a communication network for a battery system comprising busbars, wherein one data line can be omitted and is replaced by the busbars that is used as signal line as well. Hence, with the battery system according to the invention two wire protocols can be continued to be utilized in a one wire communication setup. Thus, costs of material and wiring complexity are reduced.

In the context of the present invention a first system terminal and second system terminal are understood to have different polarities. Further, a first module terminal and a second module terminal are understood to have different polarities. A first signal port and a second signal port are understood as a pair of a signal input port and a signal output port during a determined operation state of the battery system. However, due to changes of the operation state of the battery system a signal input port can become a signal output port and vise versa. It has to be further understood, that a first battery module and a second battery module refer to a pair of adjacent battery modules within the battery system. Except of the outermost battery modules of the battery system, a battery module that is a first battery module with respect to a certain second battery module can be a second battery module with respect to a certain first battery module at the same time. The outermost battery modules are always either a first or a second battery module.

The busbars are preferably made of an electrically conductive material, e.g. aluminum, and have a strip-like shape with a uniform busbar width and a uniform busbar height. However, the shape of the busbars may be freely adapted to meet individual requirements of a specific battery design, e.g. in view of a limited installation space. In particular, the busbar can be in the form of straight, bend or arbitrary curved belts, bands, ribbons, ribs or rails. The first data lines or further data lines may comprise any kind of wire, cable, metallization or an electrically conducting polymer. The data lines may be connected to the signal ports, the busbars or the terminals via interconnectors, e.g. plugs, or via firmly bonds, e.g. via wire or solder bonds.

According to the present invention, the cell supervision circuits are configured to transmit and receive analogous signals via the first data lines and via the busbars. Therein the signals are modulated on alternating currents. Advantageously, this kind of communication is widely independent of the voltage levels of the individual battery modules. Thus, less error-prone and secure communication can be provided even between unbalanced battery modules. Particularly preferred, the second signal port of the first battery module is capacitively coupled to the busbar and the busbar is capacitively coupled to the first signal port of the second battery module. The capacitive coupling preferably decouples the CSC from the voltage potentials of and the voltage drop over the busbars. This helps to protect the CSC from disturbances on the busbars. Analogous signals modulated on AC carrier currents with sufficient high frequency can pass the capacitive coupling. Another advantage of using a capacitance is that it is not absolute necessary to use the same bus bar. When different bus bars are used, it applies only one module voltage between the pins connected to the bus bar.

According to an embodiment, the battery system further comprises a plurality of second data lines, wherein each second data line electrically interconnects the second signal port, e.g. the signal output port, of the first battery module with one of the second module terminal of the first battery module and the busbar. Further preferred, the battery system comprises a plurality of third data lines, wherein each third data line electrically interconnects one of the busbar and the first module terminal of the second battery module with the first signal port, e.g. the signal input port, of the second battery module. In other words, the coupling between the busbar and the signal ports does not have to occur directly. Rather, a short data line segment may connect a signal port with a busbar, either directly or via a module terminal that terminates the busbar. Thus, the use of second data lines might be drastically reduced.

In a particularly preferred embodiment, the battery system further comprises a plurality of first high pass filters, wherein each first high pass filter is disposed in, i.e. arranged in and electrically connected to, one of the second data lines. Further preferred, the battery system comprises a plurality of second high pass filters, wherein each second high pass filter is disposed in, i.e. arranged in and electrically connected to, one of the third data lines. The first and second high pass filters are utilized to block low frequency AC components or DC components from being transmitted from the busbar to the CSCs of the battery modules. According to this embodiment, the high pass filters are arranged outside the CSCs. However, the high pass filters may also be arranged within the CSCs. Further preferred, at least one first high pass filter comprises a first capacitor and at least one second high pass filter comprises a second capacitor. Filter capacitors are a simple way to realize a high pass filter as well as capacitive coupling. According to this embodiment, capacitive coupling occurs outside the CSCs that are particularly protected from disturbances and voltage peaks on the busbars.

In order to further isolate the CSCs electronics from the power transmission on the busbars, the battery system further comprises a plurality of first isolation transformers, wherein each first isolation transformer is interconnected between the second signal port of a first battery module and a busbar. In detail, the first isolation transformer is also interconnected between the second signal port of a first battery module and a first data line. In other words, the second signal port of the first battery module and a first inductance of the first isolation transformer are arranged in a first circuit, wherein the first data line, the busbar and a second inductance of the first isolation transformer are arranged in a second circuit, wherein the first isolation transformer inductively couples the first and the second circuit.

The battery system further comprises a plurality of second isolation transformers, wherein each second isolation transformer is interconnected between a busbar and the first signal port of a second battery module. In detail, the second isolation transformer is also interconnected between the first signal port of a second battery module and a first data line. In other words, a first inductance of the second isolation transformer is also arranged in the second circuit, wherein a second inductance of the second isolation transformer and the first signal port of the second battery module are arranged in a third circuit and wherein the second isolation transformer inductively couples the first and the second circuit.

Hence, the transformers introduce additional galvanic isolation between the busbars and the CSCs electronics in order to increase safety. The galvanic isolation is further introduced in the first data line between adjacent battery modules and thus disturbances on the first data line are reduced. Particularly, the galvanic isolation of adjacent battery modules decouples the communication signals from the different voltage levels at the connected terminals of the battery modules, wherein the modulated analogous signals can pass the transformers.

According to the present invention, each of the battery modules, preferably each of the cell supervision circuits, further comprises at least one modulator and at least one demodulator. The modulators/demodulators may be integrated into the CSCs such that modulated signals already apply to the signal ports of the CSCs. Hence, signal modulation is performed distant to the busbars and any unwanted coupling of power line transmission and modulation or demodulation is avoided, particularly due to the usually good electromagnetic shielding of the CSCs. Alternatively, the modulators/demodulators can be disposed outside the CSCs and e.g. can be part of an additional chip on the battery modules. Thus binary signals may apply to the CSC's signal ports and modulation/demodulation of these signals might occur between CSC and busbar.

Particularly preferred, each of the modulators is configured to perform a frequency-shift or phase-shift keying modulation scheme and each of the demodulators is configured to perform a frequency-shift or phase-shift keying demodulation scheme. However, the modulators/demodulators may be configured to perform any kind of analogous or digital modulation technique. The used modulation/demodulation scheme depends on the signal format that is outputted to the modulator or the compatibility of the component that receive signals from the demodulator. Alternatively preferred, the modulators/demodulators are configured to perform amplitude shift-keying or quadrature amplitude modulation. The modulators/demodulators may also be configured to perform analogous (de-)modulation.

According to a further preferred embodiment, the battery system comprises a set of first switches that are interconnected between the modulator of the first battery module and the busbar and between the busbar and the demodulator of the second battery module. In detail, the set of first switches is also interconnected between the modulator of the first battery module and the first data line and between the first data line and the demodulator of the second battery module. In other words, the set of first switches comprises a first pair of first switches and a second pair of first switches, wherein the first pair of first switches is interconnected between two outputs of the modulator of the first battery module and the first data line and the busbar and wherein the second pair of first switches is interconnected between the first data line and the busbar and two inputs of the demodulator of the second battery module.

Further preferred, the battery system comprises a set of second switches that are interconnected between the demodulator of the first battery module and the busbar and between the busbar and the modulator of the second battery module. In detail, the set of second switches is also interconnected between the demodulator of the first battery module and the first data line and between the first data line and the modulator of the second battery module. In other words, the set of second switches comprises a first pair of second switches and a second pair of second switches, wherein the first pair of second switches is interconnected between two outputs of the demodulator of the first battery module and the first data line and the busbar and wherein the second pair of second switches is interconnected between the first data line and the busbar and two inputs of the modulator of the second battery module.

According to this preferred embodiment, the set of first switches is set conducting, i.e. closed, for transmitting signals from the first battery module to the second battery module and the second set of switches is set conducting, i.e. closed, for transmitting signals from the second battery module to the first battery module. In other words, bidirectional communication can be realized in the battery system of the invention, wherein the communication direction is set by setting either the first or the second pair of switches conducting.

As already mentioned, a battery module might be either a first or a second battery module with respect to different neighboring battery modules. However, the first signal port of one of the outermost battery modules, i.e. a first battery module, is coupled to battery management system (BMS), wherein the BMS is coupled to and communicates with each of the plurality of battery modules via a daisy chain configuration. Preferably, the BMS is further coupled to a board net of a vehicle, e.g. to a 12 V board net of a vehicle and comprises a high voltage (HV) connector for safely coupling to the plurality of battery modules. The HV connector may comprise a buck converter or a buck boost converter.

Another aspect of the present invention relates to a communication circuit for a battery system, comprising a first transceiver of a cell supervision circuit of a first battery module, wherein the transceiver is electrically connected to a first modulator and a first demodulator. The communication circuit further comprises a second transceiver of a cell supervision circuit of a second battery module, wherein the transceiver is electrically connected to a second modulator and a second demodulator. The first and second transceivers are configured to transmit and receive binary signals that were either provided by the BMS or another battery module (in the form of analogous signals) or generated by the respective CSC itself.

In the communication circuit a first data line is interconnected between the first transceiver and the second transceiver. Further, a busbar is configured and interconnected as a power line between the first battery module and the second battery module, i.e. between the second module terminal of the first battery module and the first module terminal of the second battery module, and is further interconnected, i.e. electronically coupled, between the first transceiver and the second transceiver. In a preferred embodiment, the busbar is connected to the first transceiver, i.e. to the first modulator or the first demodulator, via a second data line. Further preferred, the busbar is connected to the second transceiver, i.e. the second modulator or the second demodulator, via a third data line.

According to the present invention, the first and second modulator and demodulator are configured to transmit and receive analogous signals via the first data lines and the busbars. In other words, they use a circuit constituted at least by the first data line and the busbar between the first and the second transceiver to transmit and receive analogous signals. The analogous signals are preferably modulated signals fed into that circuit. In order to decouple the modulated AC signals from the power line transmission on the busbars, the first transceiver, i.e. the first modulator or first demodulator, is preferably capacitively coupled to the busbar and the busbar is preferably capacitively coupled to the second transceiver, i.e. to the second modulator or the second demodulator.

The communication circuit further comprises a set of first switches that is configured for electrically connecting or disconnecting the first modulator and the second demodulator to or from the first data line and to or from the busbar and further comprises a set of second switches that is configured for electrically connecting or disconnecting the first demodulator and the second modulator to or from the first data line and to or from the busbar. The switching state of the sets of switches determines the communication direction within the communication circuit either from first to second or from second to first battery module.

According to the present invention, the communication circuit further comprises a first isolation transformer that is interconnected between the first transceiver and the busbar and a second isolation transformer that is interconnected between the busbar and the second transceiver. In detail, the first isolation transformer is also interconnected between the first transceiver and the first data line. In other words, the first transceiver and a first inductance of the first isolation transformer are arranged in a first circuit, wherein the first data line, the busbar and a second inductance of the first isolation transformer are arranged in a second circuit and wherein the first isolation transformer inductively couples the first and the second circuit. In detail, the second isolation transformer is interconnected between the second transceiver and the first data line. In other words, a first inductance of the second isolation transformer is also arranged in the second circuit, wherein a second inductance of the second isolation transformer and second transceiver are arranged in a third circuit and wherein the second isolation transformer inductively couples the second and the third circuit.

Preferably, the communication circuit comprises a first high pass filter that is interconnected between one of the first modulator and the first demodulator and the busbar and comprises a second high pass filter that is interconnected between the busbar and one of the second modulator and the second demodulator. Preferably, the first high pass filter is disposed in, i.e. arranged in and electrically connected to, the second data line and the second high pass filter is disposed in, i.e. arranged in and electrically connected to, the third data line. The first and second high pass filters are utilized to block low frequency AC components or DC components from being transmitted from the busbar to the transceivers. Further preferred, the first high pass filter comprises a first capacitor and the second high pass filter comprises a second capacitor. The filter capacitors realize high pass filters as well as capacitive coupling.

Another aspect of the present invention relates to an electric vehicle, comprising a battery system according to the invention as described above and/or a communication circuit according to the invention as described above. Further aspects of the present invention could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic top view of a battery system according to the prior art;
- Fig. 2: illustrates a schematic top view of a battery system according to an embodiment; and
- Fig. 3: illustrates a schematic circuit diagram of a communication circuit according to an embodiment.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art.

Accordingly, processes, elements, and techniques that are not considered necessary to those having ordinary skill in the art for a complete understanding of the aspects and features of the present invention may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present invention refers to "one or more embodiments of the present invention." In the following description of embodiments of the present invention, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

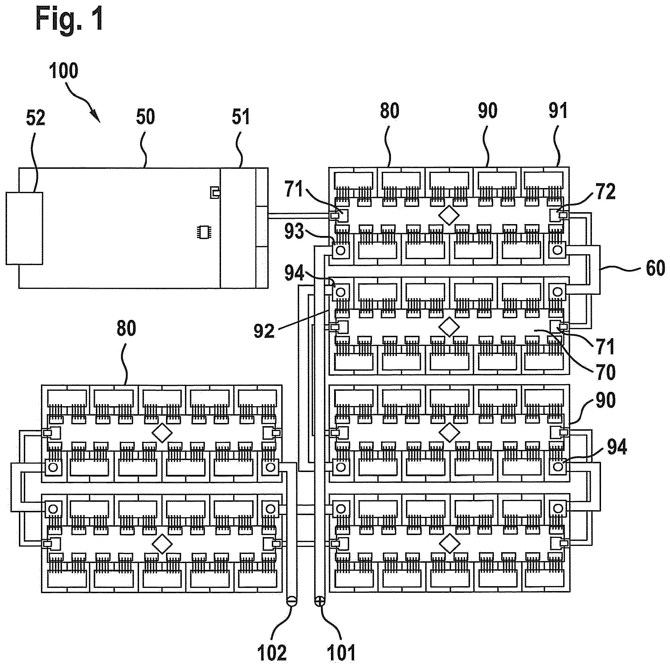

Figure 1 illustrates a schematic top view of a battery system 100 according to the prior art. Therein a plurality of battery modules 90 are electrically connected in series between a first system terminal 101 with positive polarity and a second system terminal 102 with negative polarity. Each battery module 90 comprises ten stacked prismatic battery cells 80, with five parallel connected pairs of battery cells 80 connected in series between a first module terminal 93 with positive polarity and a second module terminal 94 with negative polarity.

Each battery module 90 further comprises a cell supervision circuit (CSC) 70 disposed on top of the stacked battery cells 80. Each CSC 70 comprises a printed circuit board as a circuit carrier with a plurality of contact pads, contact metallizations and integrated circuits that are surface mounted to the carrier. The CSC 70 is electrically connected to the terminal of each battery cell 80 and is configured for monitoring and balancing the voltage of the individual battery cells 80. The CSC 70 might comprise a plurality of resistors that are connectable to the individual cells 80 for passively balancing the module 90 by dissipating energy of the highest voltage battery cells 80. Each CSC 70 further comprises a first signal port 71 and a second signal port 72 that are configured to interconnect the CSC 70 for data transmission.

The illustrated battery system 100 further comprises a battery management system (BMS) 50 that comprises a VEH converter 52 for connecting the BMS to a 12 V board net of an electric vehicle. The BMS 50 further comprises a high voltage (HV) connector 51 that is configured for safely connecting the voltage domain of the plurality of battery modules 90 to the voltage domain of the board net. The battery management system 50 is configured for communication with electric consumers connected to the board net as well as with the battery modules 90. For communicating, the BMS 50 is coupled to the modules 90 via a daisy chain configuration.

In the daisy chain configuration, the BMS 50 is coupled via a pair of data lines to the first signal port 71 of a first battery module 91 that is an outermost battery module 90, i.e. connected to a battery system terminal 101. The second signal port 72 of the first battery module 91 is coupled to a first signal port 71 of a second battery module 92 again via a pair of data lines. Thus, a two wire data connection spans across the battery system 100 and in between the CSCs 70 of the battery modules 90. Additionally to this two wire data connection, the battery system 100 comprises a plurality of busbars 60, wherein most of the busbars 60 are electrically connected between a second module terminal 94 of a first battery module 91 and a first module terminal 93 of a second battery terminal 92. However, a single busbar 60 interconnects a first module terminal 93 of an outermost battery cell 90 with the first system terminal 101 and another single busbar 60 interconnects a second module terminal 94 of an outermost battery cell 90 with the second system terminal 102.

As can be seen in Figure 1, the two wire data connections and the busbars 60 are arranged within same regions around the battery modules 90. As installation space in the battery system 100 is sparse, expensive electrical isolation means are required to avoid unwanted coupling between the busbars 70 and the two wire data connections.

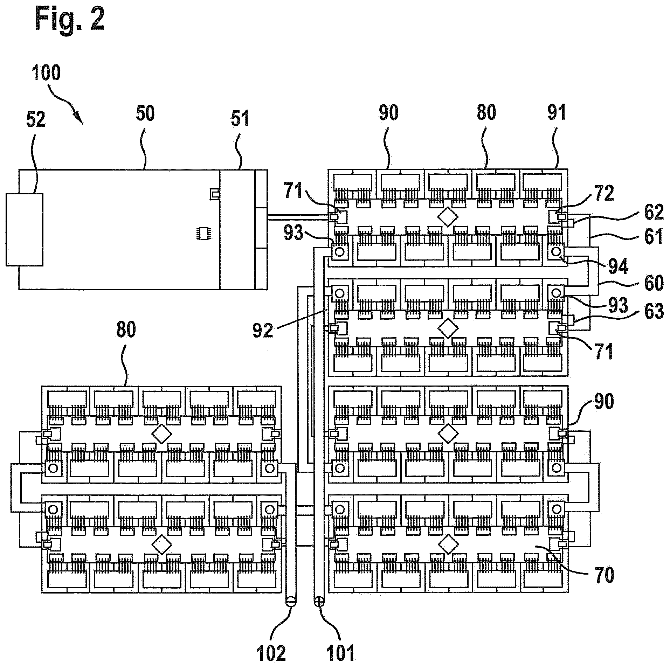

Figure 2 illustrates a battery system 100 according to an embodiment of the present invention. Elements and features that are identical to elements and features of the battery system 100 according to Figure 1 are denoted with identical reference signs.

In the battery system 100 of Figure 2, the two wire data connections of the prior art battery system are replaced by a substantially one wire data connection. Therefore, a second signal port 72 of a CSC 70 of a first battery module 91 is electronically connected with a first signal port 71 of a CSC 70 of a second battery module 92 via a single wire first data line 61 that is configured for data transmission. Further, a second data line 62 electronically connects the second signal port 72 of the CSC 70 of the first battery module 91 with a second module terminal 94 of the first battery module 91. Further, a third data line 63 electronically interconnects a first module terminal 93 of a second battery module 92 with a first signal port 71 of a CSC 70 of the second battery module 92. The combination of the second data line 62, the busbar 60 and the third data line 63 constitutes a second data connection. Together with the first data line 61 as a first data connection this second data connection constitutes a two signal path communication pathway between adjacent battery modules 91, 92. Thus, in a battery system 100 according to the present invention a full second data line between the signal ports 71, 72 of adjacent battery modules 91, 92 can be omitted. Thus, costs of material as well as wiring complexity are reduced in a battery system 100 according to the present invention. Further, crosstalk between power transmission and data transmission can be avoided or at least reduced with the battery system 100 according to the invention.

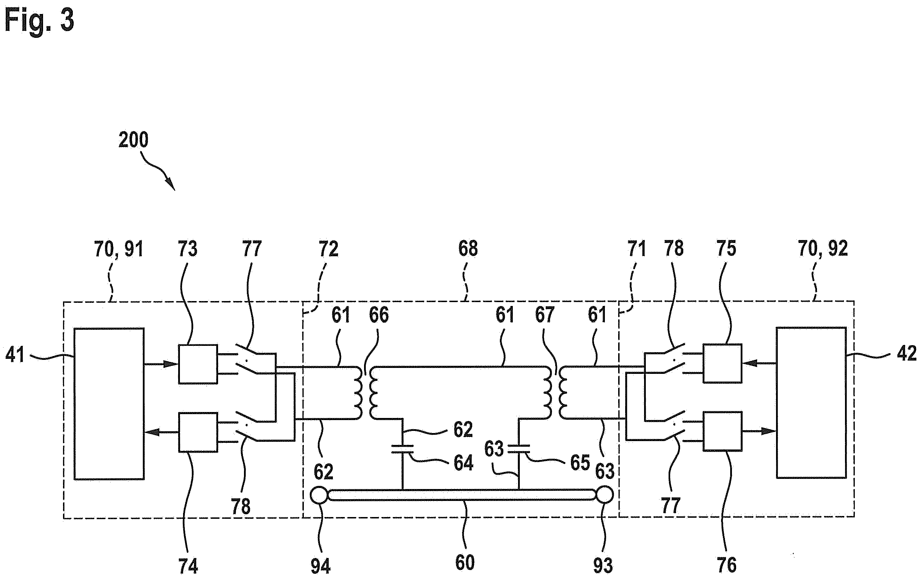

Figure 3 illustrates a schematic circuit diagram of a communication circuit 200 for a battery system 100 according to the present invention. The illustrated communication circuit depicts the necessary or advantageous elements for realizing the system 100 of Figure 2.

The illustrated circuit 200 comprises a CSC 70 of a first battery module 91 that is electronically connected with a CSC 70 of a second battery module 92 via a communication pathway 68. The assignment of certain circuit elements, e.g. modulators, demodulators and switches, to the CSCs 70 is only exemplarily; these components could also be assigned to the communication pathway 68.

In the illustrated communication circuit 200 the CSC 70 of the first battery module 91 comprises a first transceiver 41 that is electronically connect to a first modulator 73 and is configured to provide binary signals, e.g. in form of a high voltage level VDD and a low voltage level VSS, to the first modulator 73. The first transceiver 41 is further electronically connected to a first demodulator 74 and is configured to receive binary signals from the first demodulator 74. A pair of first switches 77 provides a switchable electrical connection from the first modulator 73 to a first data line 61 and to a second data line 62, wherein a pair of second switches 78 provides a switchable electrical connection from the first demodulator 74 to the first data line 61 and the second date line 62. In the illustrated embodiment of the communication circuit 200, the dashed line between the CSC 70 of the first battery module 91 and the signal pathway 68 can also be interpreted as indicating a second signal port 72.

The CSC 70 of the second battery module 92 comprises a second transceiver 42 that is electronically connect to a second modulator 75 and is configured to provide binary signals, e.g. in form of a high voltage level VDD and a low voltage level VSS, to the second modulator 75. The second transceiver 42 is further electronically connected to a second demodulator 76 and is configured to receive binary signals from the second demodulator 76. A pair of second switches 78 provides a switchable electrical connection from the second modulator 75 to the first data line 61 and to a third data line 63, wherein a pair of first switches 77 provides a switchable electrical connection from the second demodulator 76 to the first data line 61 and the third date line 63. In the illustrated embodiment of the communication circuit 200, the dashed line between the CSC 70 of the second battery module 92 and the signal pathway 68 can also be interpreted as indicating a first signal port 71.

The set of first switches 77 are commonly operated such that either all first switches 77 are closed, i.e. to provide a conducting connection, or all first switches 77 are opened, i.e. to separate the conducting connection. The set of second switches 78 are also commonly operated such that either are all second switches 78 are closed, i.e. to provide a conducting connection, or all second switches 78 are opened, i.e. to separate the conducting connection. The set of first switches 77 and the set of second switches might be actuated via one or more relays (not shown).

The communication pathway 68 comprises a first data line 61 and a second data line 62 that are electrically connected to the second signal port 72 of the CSC 70 of the first battery module 91. Within the first data line 61 and the second data line 62 a first isolation transformer 66 is arranged. The first isolation transformer 66 comprises a first inductance and a second inductance, wherein the first inductance is arranged in a first circuit that is formed of segments of the first data line 61 and the second data line 62, one pair first or second switches 77, 78 and the first modulator 73 or first demodulator 74. The second data line 62 is electrically connected to the busbar 60, wherein the busbar 60 as a whole interconnects a second module terminal 94 of the first battery module 91 with a first module terminal 93 of a second battery module 92. Further, a first filter capacitor 64 is arranged in the second data line 62. The first data line 61 and a third data line 63 are further electrically connected to a first signal port 71 of a second battery module 92. Therein, the third data line 63 is electrically connected to the busbar 60 near the CSC 70 of the second battery module 92. Further, a second filter capacitor 65 is arranged in the third data line 63. A second isolation transformer 67 is arranged within the first data line 61 and the third data line 63. The first isolation transformer 67 comprises a first inductance and a second inductance, wherein the second inductance is arranged in a third circuit that is formed of segments of the first data line 61 and the third data line 63, one pair first or second switches 77, 78 and the second modulator 75 or second demodulator 76. The second inductance of the first isolation transformer 66 and the first inductance of the second isolation transformer 67 are arranged in a second circuit that is formed of segments of the first data line 61, the second data line 62, the third data line 63 and the busbar 60. The second circuit further comprises the first and second filter capacitors 64, 65.

In a first operation state of the communication circuit 200 according to the embodiment, the first transceiver 42 transmits binary signals to the first modulator 73 that modulates the signals via a FSK modulation scheme onto a HF carrier frequency. The set of first switches 77 is closed and the set of second switches 78 is opened such that the first modulator 73 feeds the signal into the first circuit, i.e. the first data line 61 and the second data line 62. The signal passes the first isolation transformer 66, while DC components and low frequency disturbances in the signal are blocked. The signal is transmitted via the second circuit, i.e. the second data line 62, the busbar 60 and the third data line 63 as well as the fist data line 61 to the second demodulator 76 that is connected to the first and third data lines 61, 63 via the first switches 77. Therein, the second filter capacitor 65 blocks DC components at the busbar 60 from being transmitted to the second demodulator 76 and further isolates the voltage level in the CSC 70 of the second battery module 92 from the voltage level of the busbar 60. The second demodulator 76 demodulates the signal via a FSK demodulation scheme and transmits binary signals to the second transceiver 42 of the second battery module 92. In the first operation state the CSC 70 of the first battery module 91 thus transmits signals to the CSC 70 of the second battery module 92.

In a second operation state of the communication circuit 200 according to the embodiment, the second transceiver 42 transmits binary signals to the second modulator 75 that modulates the signals via a FSK modulation scheme onto a HF carrier frequency. The set of second switches 78 is closed and the set of first switches 77 is opened such that the second modulator 75 feeds the signal into the third circuit, i.e. the first data line 61 and the third data line 63. The signal passes the first isolation transformer 67, while DC components and low frequency disturbances in the signal are blocked. The signal is transmitted via the second circuit, i.e. the third data line 63, the busbar 60 and the second data line 62 as well as the first data line 61 to the first demodulator 74 that is connected to the first and second data lines 61, 62 via the second switches 78. Therein, the first filter capacitor 64 blocks DC components at the busbar 60 from being transmitted to the first demodulator 74 and further isolates the voltage level in the CSC 70 of the first battery module 91 from the voltage level of the busbar 60. The first demodulator 74 demodulates the signal via a FSK demodulation scheme and transmits binary signals to the first transceiver 41 of the first battery module 91. In the first operation state the CSC 70 of the second battery module 92 thus transmits signals to the CSC 70 of the first battery module 91. The first and second switches 77, 78 determine thus the operation state of the communication circuit 200 and the communication direction.

The electronic or electric devices and/or any other relevant devices or components according to embodiments of the present invention described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may comprise metallization, e.g. surface metallizations and/or pins, and/or may comprise conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present invention.

### Reference signs

- 200: communication circuit
- 100: battery system
- 101: first system terminal
- 102: second system terminal

- 90: battery module
- 91: first battery module
- 92: second battery module
- 93: first module terminal
- 94: second module terminal

- 80: battery cell

- 70: cell supervision circuit (CSC)
- 71: first signal port
- 72: second signal port
- 73: first modulator
- 74: first demodulator
- 75: second modulator
- 76: second demodulator
- 77: first switch
- 78: second switch
- 41: first transceiver
- 42: second transceiver

- 60: busbar
- 61: first data line
- 62: second data line
- 63: third data line
- 64: first high pass filter / second capacitor
- 65: second high pass filter / second capacitor
- 66: first isolation transformer
- 67: second isolation transformer
- 68: transmission pathway

- 50: battery management system (BMS)
- 51: high voltage (HV) connector
- 52: VEH converter

## Claims

1. A battery system (100), comprising:
a first system terminal (101) and a second system terminal (101);
a plurality of battery modules (90) connected in series between the first system terminal (101) and the second system terminal (101), each battery module (90) comprising a plurality of battery cells (80) connected in series and/or in parallel between a first module terminal (93) and a second module terminal (94) and a cell supervision circuit (70) with a first signal port (71) and a second signal port (72);
a plurality of busbars (60), each busbar (60) interconnecting a second module terminal (94) of a first battery module (91) and a first module terminal (93) of second battery module (92),
wherein the second signal port (72) of a first battery module (91) and the first signal port (71) of a second battery module (92) are coupled via one of a plurality of first data lines (61) and via one of the plurality of busbars (60),
wherein at least some of the battery modules (90) further comprise a modulator (73,75) configured to modulate a signal on a high frequency, HF, alternating current to be fed on one of the first data lines (61) and one of the busbars (60) and a demodulator (74,76) configured to demodulate a signal from a HF alternating current received from one of the first data lines (61) and one the busbars (60), and
wherein the cell supervision circuits (70) are configured to transmit and receive signals via the first data lines (61) and the busbars (60).

2. The battery system (100) according to claim 1, wherein the cell supervision circuits (70) are configured to transmit and receive analogous signals via the first data lines (61) and the busbars (60).

3. The battery system (100) according to claim 1 or 2, wherein the second signal port (72) of the first battery module (91) is capacitively coupled to the busbar (60) and wherein the busbar (60) is capacitively coupled to the first signal port (71) of the second battery module (92).

4. The battery system (100) according to any one of the preceding claims, further comprising:
a plurality of second data lines (62), each second data line (62) interconnecting the second signal port (72) of the first battery module (91) with one of the second module terminal (94) of the first battery module (91) and the busbar (60); and
a plurality of third data lines (63), each third data line (63) interconnecting one of the busbar (60) and the first module terminal (93) of the second battery module (92) with the first signal port (71) of the second battery module (92).

5. The battery system (100) according to claim 4, further comprising:
a plurality of first high pass filters (64), each first high pass filter (64) being disposed in one of the second data lines (62); and
a plurality of second high pass filters (65), each second high pass filter (65) being disposed in one of the third data lines (63).

6. The battery system (100) according to claim 5, wherein a first high pass filter comprises a first capacitor (64) and wherein a second high pass filter comprises a second capacitor (65).

7. The battery system (100) according to any one of the preceding claims, further comprising
a plurality of first isolation transformers (66), each first isolation transformer (66) being interconnected between the second signal port (71) of a first battery module (92) and a busbar (60); and
a plurality of second isolation transformers (67), each second isolation transformer (67) being interconnected between a busbar (60) and the first signal port (71) of a second battery module (92).

8. The battery system (100) according to claim 1, wherein each of the modulators (73,75) is configured to perform a frequency-shift or phase-shift keying modulation scheme and wherein each of the demodulators (74,76) is configured to perform a frequency-shift or phase-shift keying demodulation scheme.

9. The battery system (100) according to claim 1 or 8,
wherein a set of first switches (77) is interconnected between the modulator (73) of the first battery module (91) and the busbar (60) and between the busbar (60) and the demodulator (76) of the second battery module (92),
wherein a set of second switches (78) is interconnected between the demodulator (74) of the first battery module (91) and the busbar (60) and between the busbar (60) and the modulator (75) of the second battery module (92).

10. The battery system (100) according to claim 9,
wherein the set of first switches (77) is set conducting for transmitting signals from the first battery module (91) to the second battery module (92), and
wherein the second set of switches (78) is set conducting for transmitting signals from the second battery module (92) to the first battery module (91).

11. The battery system (100) according to any one of the preceding claims, further comprising a battery management system (50) coupled to the first signal port (71) of a first battery module (91) and communicating with each of the plurality of battery modules (90) via a daisy chain configuration.

12. A communication circuit (200) for a battery system (100), comprising
a first transceiver (41) of a cell supervision circuit (70) of a first battery module (91) electrically connected to a first modulator (73) and a first demodulator (74);
a second transceiver (42) of a cell supervision circuit (70) of a second battery module (92) electrically connected to a second modulator (75) and a second demodulator (76);
a first data line (61) interconnected between the first transceiver (41) and the second transceiver (42);
a busbar (60) configured and interconnected as a power line between the first battery module (91) and the second battery module (92) and capacitively coupled between the first transceiver (41) and the second transceiver (42);
a set of first switches (77) configured for electrically connecting or disconnecting the first modulator (73) and the second demodulator (76) to the first data line (61) and to the busbar (60);
a set of second switches (78) configured for electrically connecting or disconnecting the first demodulator (74) and the second modulator (75) to the first data line (61) and to the busbar (60);
a first isolation transformer (66) interconnected between the first transceiver (41) and the busbar (60) and a second isolation transformer (67) interconnected between the busbar (60) and the second transceiver (42).

13. The communication circuit (200) according to claim 12, further comprising
a first high-pass filter (64) interconnected between one of the first modulator (73) and the first demodulator (74) and the busbar (60); and/or
a second high-pass filter (65) interconnected between the busbar (60) and one of the second modulator (75) and the second demodulator (76).

14. An electric vehicle, comprising a battery system (100) according to one of the claims 1 to 11 and/or a communication circuit (200) according to any claims 12 and 13.

## Patentansprüche

1. Batteriesystem (100), umfassend:
einen ersten Systemanschluss (101) und einen zweiten Systemanschluss (101);
eine Vielzahl von Batteriemodulen (90), die zwischen dem ersten Systemanschluss (101) und dem zweiten Systemanschluss (101) in Reihe geschaltet sind, wobei jedes Batteriemodul (90) eine Vielzahl von Batteriezellen (80), die zwischen einem ersten Modulanschluss (93) und einem zweiten Modulanschluss (94) in Reihe und/oder parallel geschaltet sind, und eine Zellenüberwachungsschaltung (70) mit einem ersten Signalanschluss (71) und einem zweiten Signalanschluss (72) umfasst;
eine Vielzahl von Sammelschienen (60), wobei jede Sammelschiene (60) einen zweiten Modulanschluss (94) eines ersten Batteriemoduls (91) und einen ersten Modulanschluss (93) eines zweiten Batteriemoduls (92) miteinander verbindet,
wobei der zweite Signalanschluss (72) eines ersten Batteriemoduls (91) und der erste Signalanschluss (71) eines zweiten Batteriemoduls (92) über eine von einer Vielzahl von ersten Datenleitungen (61) und über eine der Vielzahl von Sammelschienen (60) gekoppelt sind,
wobei zumindest einige der Batteriemodule (90) ferner einen Modulator (73, 75), der so konfiguriert ist, dass er ein Signal auf einen Hochfrequenz-, HF,-Wechselstrom moduliert, der in eine der ersten Datenleitungen (61) und eine der Sammelschienen (60) eingespeist werden soll, und einen Demodulator (74, 76) umfassen, der so konfiguriert ist, dass er ein Signal von einem HF-Wechselstrom demoduliert, der von einer der ersten Datenleitungen (61) und einer der Sammelschienen (60) empfangen wird, und
wobei die Zellenüberwachungsschaltungen (70) so konfiguriert sind, dass sie Signale über die ersten Datenleitungen (61) und die Sammelschienen (60) senden und empfangen.

2. Batteriesystem (100) nach Anspruch 1, wobei die Zellenüberwachungsschaltungen (70) so konfiguriert sind, dass sie analoge Signale über die ersten Datenleitungen (61) und die Sammelschienen (60) senden und empfangen.

3. Batteriesystem (100) nach Anspruch 1 oder 2, wobei der zweite Signalanschluss (72) des ersten Batteriemoduls (91) kapazitiv mit der Sammelschiene (60) gekoppelt ist und wobei die Sammelschiene (60) kapazitiv mit dem ersten Signalanschluss (71) des zweiten Batteriemoduls (92) gekoppelt ist.

4. Batteriesystem (100) nach einem der vorangehenden Ansprüche, das ferner umfasst:
eine Vielzahl von zweiten Datenleitungen (62), wobei jede zweite Datenleitung (62) den zweiten Signalanschluss (72) des ersten Batteriemoduls (91) mit einem des zweiten Modulanschlusses (94) des ersten Batteriemoduls (91) und der Sammelschiene (60) verbindet; und
eine Vielzahl von dritten Datenleitungen (63), wobei jede dritte Datenleitung (63) entweder die Sammelschiene (60) oder den ersten Modulanschluss (93) des zweiten Batteriemoduls (92) mit dem ersten Signalanschluss (71) des zweiten Batteriemoduls (92) verbindet.

5. Batteriesystem (100) nach Anspruch 4, das ferner umfasst:
eine Vielzahl von ersten Hochpassfiltern (64), wobei jeder erste Hochpassfilter (64) in einer der zweiten Datenleitungen (62) angeordnet ist; und
eine Vielzahl von zweiten Hochpassfiltern (65), wobei jeder zweite Hochpassfilter (65) in einer der dritten Datenleitungen (63) angeordnet ist.

6. Batteriesystem (100) nach Anspruch 5, wobei ein erster Hochpassfilter einen ersten Kondensator (64) umfasst und wobei ein zweiter Hochpassfilter einen zweiten Kondensator (65) umfasst.

7. Batteriesystem (100) nach einem der vorangehenden Ansprüche, das ferner Folgendes umfasst:
eine Vielzahl von ersten Trenntransformatoren (66), wobei jeder erste Trenntransformator (66) zwischen dem zweiten Signalanschluss (71) eines ersten Batteriemoduls (92) und einer Sammelschiene (60) verbunden ist; und
eine Vielzahl von zweiten Trenntransformatoren (67), wobei jeder zweite Trenntransformator (67) zwischen einer Sammelschiene (60) und dem ersten Signalanschluss (71) eines zweiten Batteriemoduls (92) verbunden ist.

8. Batteriesystem (100) nach Anspruch 1, wobei jeder der Modulatoren (73, 75) so konfiguriert ist, dass er ein Frequenzumtastungs- oder Phasenumtastungsmodulationsschema durchführt und wobei jeder der Demodulatoren (74, 76) so konfiguriert ist, dass er ein Frequenzumtastungs- oder Phasenumtastungsdemodulationsschema durchführt.

9. Batteriesystem (100) nach Anspruch 1 oder 8,
wobei ein Satz von ersten Schaltern (77) zwischen dem Modulator (73) des ersten Batteriemoduls (91) und der Sammelschiene (60) und zwischen der Sammelschiene (60) und dem Demodulator (76) des zweiten Batteriemoduls (92) verbunden ist,
wobei ein Satz von zweiten Schaltern (78) zwischen dem Demodulator (74) des ersten Batteriemoduls (91) und der Sammelschiene (60) und zwischen der Sammelschiene (60) und dem Modulator (75) des zweiten Batteriemoduls (92) verbunden ist.

10. Batteriesystem (100) nach Anspruch 9,
wobei der Satz von ersten Schaltern (77) leitend eingestellt ist, um Signale von dem ersten Batteriemodul (91) zu dem zweiten Batteriemodul (92) zu übertragen, und
wobei der zweite Satz von Schaltern (78) leitend eingestellt ist, um Signale von dem zweiten Batteriemodul (92) zu dem ersten Batteriemodul (91) zu übertragen.

11. Batteriesystem (100) nach einem der vorhergehenden Ansprüche, das ferner ein Batteriemanagementsystem (50) umfasst, das mit dem ersten Signalanschluss (71) eines ersten Batteriemoduls (91) verbunden ist und mit jedem der Vielzahl von Batteriemodulen (90) über eine Daisy-Chain-Konfiguration kommuniziert.

12. Kommunikationsschaltung (200) für ein Batteriesystem (100), die Folgendes umfasst
einen ersten Transceiver (41) einer Zellenüberwachungsschaltung (70) eines ersten Batteriemoduls (91), der elektrisch mit einem ersten Modulator (73) und einem ersten Demodulator (74) verbunden ist;
einen zweiten Transceiver (42) einer Zellenüberwachungsschaltung (70) eines zweiten Batteriemoduls (92), der elektrisch mit einem zweiten Modulator (75) und einem zweiten Demodulator (76) verbunden ist;
eine erste Datenleitung (61), die zwischen dem ersten Transceiver (41) und dem zweiten Transceiver (42) verbunden ist;
eine Sammelschiene (60), die als eine Stromleitung zwischen dem ersten Batteriemodul (91) und dem zweiten Batteriemodul (92) konfiguriert und verbunden ist und kapazitiv zwischen dem ersten Transceiver (41) und dem zweiten Transceiver (42) gekoppelt ist;
einen Satz von ersten Schaltern (77), die so konfiguriert sind, dass sie den ersten Modulator (73) und den zweiten Demodulator (76) mit der ersten Datenleitung (61) und der Sammelschiene (60) elektrisch verbinden oder von diesen trennen;
einen Satz von zweiten Schaltern (78), die so konfiguriert sind, dass sie den ersten Demodulator (74) und den zweiten Modulator (75) mit der ersten Datenleitung (61) und der Sammelschiene (60) elektrisch verbinden oder von diesen trennen;
einen ersten Trenntransformator (66), der zwischen dem ersten Transceiver (41) und der Sammelschiene (60) verbunden ist, und einen zweiten Trenntransformator (67), der zwischen der Sammelschiene (60) und dem zweiten Transceiver (42) verbunden ist.

13. Kommunikationsschaltung (200) nach Anspruch 12, die ferner umfasst
einen ersten Hochpassfilter (64), der zwischen einem des ersten Modulators (73) und des ersten Demodulators (74) und der Sammelschiene (60) verbunden ist; und/oder
einen zweiten Hochpassfilter (65), der zwischen der Sammelschiene (60) und einem des zweiten Modulators (75) und des zweiten Demodulators (76) verbunden ist.

14. Elektrofahrzeug, umfassend ein Batteriesystem (100) nach einem der Ansprüche 1 bis 11 und/oder eine Kommunikationsschaltung (200) nach einem der Ansprüche 12 und 13.

## Revendications

1. Système de batterie (100), comprenant :
une première borne de système (101) et une seconde borne de système (101) ;
une pluralité de modules de batterie (90) connectés en série entre la première borne de système (101) et la seconde borne de système (101), chaque module de batterie (90) comprenant une pluralité d'éléments de batterie (80) connectés en série et/ou en parallèle entre une première borne de module (93) et une seconde borne de module (94) et un circuit de supervision d'éléments (70) ayant un premier port de signal (71) et un second port de signal (72) ;
une pluralité de barres omnibus (60), chaque barre omnibus (60) interconnectant une seconde borne de module (94) d'un premier module de batterie (91) et une première borne de module (93) d'un second module de batterie (92),
dans lequel le second port de signal (72) d'un premier module de batterie (91) et le premier port de signal (71) d'un second module de batterie (92) sont couplés par l'intermédiaire de l'une d'une pluralité de premières lignes de données (61) et par l'intermédiaire de l'une de la pluralité de barres omnibus (60),
dans lequel au moins certains des modules de batterie (90) comprennent en outre un modulateur (73,75) configuré pour moduler un signal sur un courant alternatif de haute fréquence, HF, devant être fourni sur l'une des premières lignes de données (61) et l'une des barres omnibus (60) et un démodulateur (74,76) configuré pour démoduler un signal à partir d'un courant alternatif HF reçu à partir de l'une des premières lignes de données (61) et de l'une des barres omnibus (60), et
dans lequel les circuits de supervision d'éléments (70) sont configurés pour transmettre et recevoir des signaux par l'intermédiaire des premières lignes de données (61) et des barres omnibus (60).

2. Système de batterie (100) selon la revendication 1, dans lequel les circuits de supervision d'éléments (70) sont configurés pour transmettre et recevoir des signaux analogues par l'intermédiaire des premières lignes de données (61) et des barres omnibus (60).

3. Système de batterie (100) selon la revendication 1 ou 2, dans lequel le second port de signal (72) du premier module de batterie (91) est couplé de manière capacitive à la barre omnibus (60) et dans lequel la barre omnibus (60) est couplée de manière capacitive au premier port de signal (71) du second module de batterie (92).

4. Système de batterie (100) selon l'une quelconque des revendications précédentes, comprenant en outre :
une pluralité de deuxièmes lignes de données (62), chaque seconde ligne de données (62) interconnectant le second port de signal (72) du premier module de batterie (91) à l'une de la seconde borne de module (94) du premier module de batterie (91) et de la barre omnibus (60) ; et
une pluralité de troisièmes lignes de données (63), chaque troisième ligne de données (63) interconnectant l'une de la barre omnibus (60) et de la première borne de module (93) du second module de batterie (92) au premier port de signal (71) du second module de batterie (92).

5. Système de batterie (100) selon la revendication 4, comprenant en outre :
une pluralité de premiers filtres passe-haut (64), chaque premier filtre passe-haut (64) étant disposé dans l'une des deuxièmes lignes de données (62) ; et
une pluralité de seconds filtres passe-haut (65), chaque second filtre passe-haut (65) étant disposé dans l'une des troisièmes lignes de données (63).

6. Système de batterie (100) selon la revendication 5, dans lequel un premier filtre passe-haut comprend un premier condensateur (64) et dans lequel un second filtre passe-haut comprend un second condensateur (65).

7. Système de batterie (100) selon l'une quelconque des revendications précédentes, comprenant en outre
une pluralité de premiers transformateurs d'isolation (66), chaque premier transformateur d'isolation (66) étant interconnecté entre le second port de signal (71) d'un premier module de batterie (92) et une barre omnibus (60) ; et
une pluralité de seconds transformateurs d'isolation (67), chaque second transformateur d'isolation (67) étant interconnecté entre une barre omnibus (60) et le premier port de signal (71) d'un second module de batterie (92).

8. Système de batterie (100) selon la revendication 1, dans lequel chacun des modulateurs (73,75) est configuré pour effectuer un schéma de modulation par déplacement de fréquence ou par déplacement de phase et dans lequel chacun des démodulateurs (74,76) est configuré pour effectuer un schéma de démodulation par déplacement de fréquence ou par déplacement de phase.

9. Système de batterie (100) selon la revendication 1 ou 8,
dans lequel un ensemble de premiers commutateurs (77) est interconnecté entre le modulateur (73) du premier module de batterie (91) et la barre omnibus (60) et entre la barre omnibus (60) et le démodulateur (76) du second module de batterie (92),
dans lequel un ensemble de seconds commutateurs (78) est interconnecté entre le démodulateur (74) du premier module de batterie (91) et la barre omnibus (60) et entre la barre omnibus (60) et le modulateur (75) du second module de batterie (92).

10. Système de batterie (100) selon la revendication 9, dans lequel l'ensemble de premiers commutateurs (77) est réglé conducteur pour transmettre des signaux du premier module de batterie (91) au second module de batterie (92), et
dans lequel le second ensemble de commutateurs (78) est réglé conducteur pour transmettre des signaux du second module de batterie (92) au premier module de batterie (91).

11. Système de batterie (100) selon l'une quelconque des revendications précédentes, comprenant en outre un système de gestion de batterie (50) couplé au premier port de signal (71) d'un premier module de batterie (91) et communiquant avec chacun de la pluralité de modules de batterie (90) par l'intermédiaire d'une configuration en guirlande.

12. Circuit de communication (200) pour un système de batterie (100), comprenant
un premier émetteur-récepteur (41) d'un circuit de supervision d'éléments (70) d'un premier module de batterie (91) connecté électriquement à un premier modulateur (73) et à un premier démodulateur (74) ;
un second émetteur-récepteur (42) d'un circuit de supervision d'éléments (70) d'un second module de batterie (92) connecté électriquement à un second modulateur (75) et à un second démodulateur (76) ;
une première ligne de données (61) interconnectée entre le premier émetteur-récepteur (41) et le second émetteur-récepteur (42) ;
une barre omnibus (60) configurée et interconnectée en tant que ligne d'alimentation entre le premier module de batterie (91) et le second module de batterie (92) et couplée de manière capacitive entre le premier émetteur-récepteur (41) et le second émetteur-récepteur (42) ;
un ensemble de premiers commutateurs (77) configuré pour connecter ou déconnecter électriquement le premier modulateur (73) et le second démodulateur (76) à la première ligne de données (61) et à la barre omnibus (60) ;
un ensemble de seconds commutateurs (78) configuré pour connecter ou déconnecter électriquement le premier démodulateur (74) et le second modulateur (75) à la première ligne de données (61) et à la barre omnibus (60) ;
un premier transformateur d'isolation (66) interconnecté entre le premier émetteur-récepteur (41) et la barre omnibus (60) et un second transformateur d'isolation (67) interconnecté entre la barre omnibus (60) et le second émetteur-récepteur (42).

13. Circuit de communication (200) selon la revendication 12, comprenant en outre
un premier filtre passe-haut (64) interconnecté entre l'un du premier modulateur (73) et du premier démodulateur (74) et la barre omnibus (60) ; et/ou
un second filtre passe-haut (65) interconnecté entre la barre omnibus (60) et l'un du second modulateur (75) et du second démodulateur (76).

14. Véhicule électrique, comprenant un système de batterie (100) selon l'une des revendications 1 à 11 et/ou un circuit de communication (200) selon l'une quelconque des revendications 12 et 13.
